(19) Europäisches Patentamt / European Patent Office / Office européen des brevets

(11) **EP 4 418 348 A1**

(12) **EUROPEAN PATENT APPLICATION**

(43) Date of publication:
**21.08.2024 Bulletin 2024/34**

(21) Application number: **24156960.7**

(22) Date of filing: **09.02.2024**

(51) International Patent Classification (IPC):
*H01M 4/133* (2010.01)    *H01M 4/134* (2010.01)
*H01M 4/36* (2006.01)    *H01M 4/38* (2006.01)
*H01M 4/587* (2010.01)    *H01M 4/62* (2006.01)
*H01M 10/0525* (2010.01)

(52) Cooperative Patent Classification (CPC):
**H01M 4/134; H01M 4/133; H01M 4/366;**
**H01M 4/386; H01M 4/587; H01M 4/625;**
**H01M 10/0525;** H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.02.2023 KR 20230018004**

(71) Applicant: **SK On Co., Ltd.**
**Seoul 03161 (KR)**

(72) Inventors:
• **KIM, Hyo Mi**
  **34124 Daejeon (KR)**
• **KIM, Moon Sung**
  **34124 Daejeon (KR)**
• **RYU, Sang Baek**
  **34124 Daejeon (KR)**
• **YOOK, Seung Hyun**
  **34124 Daejeon (KR)**
• **JANG, Hwan Ho**
  **34124 Daejeon (KR)**
• **CHUNG, Da Bin**
  **34124 Daejeon (KR)**
• **HAN, Jun Hee**
  **34124 Daejeon (KR)**
• **PARK, Da Hye**
  **34124 Daejeon (KR)**
• **BANG, Sang In**
  **34124 Daejeon (KR)**

(74) Representative: **Stolmár & Partner**
**Patentanwälte PartG mbB**
**Blumenstraße 17**
**80331 München (DE)**

(54) **ANODE FOR SECONDARY BATTERY AND LITHIUM SECONDARY BATTERY INCLUDING ANODE**

(57) An anode for a secondary battery is disclosed. In some implementations, the anode includes an anode current collector, a first anode mixture layer on at least one surface of the anode current collector, and a second anode mixture layer on the first anode mixture layer. The first anode mixture layer includes a first silicon-based active material including a carbon coating layer formed on a surface thereof, and a first conductive material. The second anode mixture layer includes a second silicon-based active material doped with a metal, and a second conductive material. The first conductive material has a Raman R value, greater than or equal to a Raman R value of the second conductive material.

According to some implementations, volume expansion/contraction of a silicon-based active material may be alleviated during battery charging/discharging.

FIG. 1

EP 4 418 348 A1

**Description**

**BACKGROUND**

**1. FIELD**

The technology and implementations disclosed in this patent document generally relate to an anode for a secondary battery and a lithium secondary battery including the same.

**2. DESCRIPTION OF THE RELATED ART**

Recently, a large amount of research has been conducted into electric vehicles (EVs) capable of replacing fossil fuel-based vehicles, one of the main causes of air pollution. Lithium secondary batteries having high discharge voltage and output stability have been mainly used as power sources for electric vehicles (EVs), and a need for lithium secondary batteries having high energy density has been increasing.

Accordingly, high-capacity anodes having high energy density have also been actively developed and researched.

**SUMMARY**

The disclosed technology can be implemented in some embodiments to alleviate volumetric expansion/contraction of a silicon-based active material during battery charging/discharging.

The disclosed technology can be implemented in some embodiments to alleviate the occurrence of cracks in an active material of an anode for a secondary battery.

The disclosed technology can be implemented in some embodiments to provide a high-capacity anode for a secondary battery having excellent lifespan characteristics in a high temperature environment.

The disclosed technology can be implemented in some embodiments to provide a high-capacity anode for a secondary battery having excellent rapid charging characteristics in a high temperature environment.

In some embodiments of the disclosed technology, an anode for a secondary battery, the anode includes an anode current collector, a first anode mixture layer on at least one surface of the anode current collector, and a second anode mixture layer on the first anode mixture layer. The first anode mixture layer may include a first silicon-based active material including a carbon coating layer formed on a surface thereof, and a first conductive material. The second anode mixture layer may include a second silicon-based active material doped with a metal, and a second conductive material. The first conductive material may have a Raman R value according to Equation 1 below, greater than or equal to a Raman R value of the second conductive material.

$$[\text{Equation 1}]$$

$$\text{Raman R} = A_D/A_G$$

In Equation 1, $A_D$ may be a peak area value of an absorption region of 1330 to 1380 cm$^{-1}$, and $A_G$ may be a peak area value of an absorption region of 1550 to 1625 cm$^{-1}$.

The metal may include at least one selected from among lithium (Li), magnesium (Mg), calcium (Ca), iron (Fe), titanium (Ti), vanadium (V), and aluminum (Al).

A content of the first silicon-based active material included in the first anode mixture layer may be less than or equal to a content of the second silicon-based active material included in the second anode mixture layer.

The content of the first silicon-based active material included in the first anode mixture layer may be 0.1 to 5 wt%.

The content of the second silicon-based active material included in the second anode mixture layer may be 5 to 30 wt%.

The Raman R value of the first conductive material may be 0.1 to 0.5.

The Raman R value of the second conductive material may be 0.001 to 0.1.

The first conductive material may include at least one selected from among artificial graphite, natural graphite, graphene, carbon black, super P, and hard carbon.

The second conductive material may include at least one selected from among a multi-walled carbon nanotube (MWCNT), a single-walled carbon nanotube (SWCNT), and a thin-walled carbon nanotube (TWCNT).

**A particle size (D50) of the first conductive material may be 1 to 10 $\mu$m.**

A length of the second conductive **material may be 5 to 100 $\mu$m.**

A content of the first conductive material included in the first anode mixture layer may be greater than or equal to a content of the second conductive material included in the second anode mixture layer.

The content of the first conductive material included in the first anode mixture layer may be 0.3 to 5 wt%.

The content of the second conductive material included in the second anode mixture layer may be 0.01 to 0.3 wt%.

In some embodiments of the disclosed technology, a lithium secondary battery includes the anode of one of the above-described embodiments.

According to an embodiment of the disclosed technology, volumetric expansion/contraction of a silicon-based active material may be alleviated during battery charging/discharging.

According to another embodiment of the disclosed technology, a high-capacity anode for a secondary battery may have excellent lifespan characteristics in a high temperature environment.

According to another embodiment of the disclosed technology, a high-capacity anode for a secondary battery may have excellent rapid charging characteristics in a high temperature environment.

According to another embodiment of the disclosed technology, electrolyte consumption may be reduced.

## BRIEF DESCRIPTION OF DRAWINGS

Certain aspects, features, and advantages of the disclosed technology are illustrated by the following detailed description with reference to the accompanying drawings.

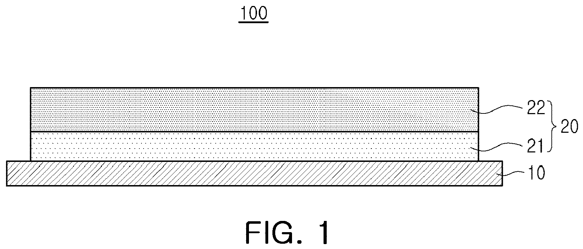

FIG. 1 is a schematic cross-sectional view of a structure of an anode for a secondary battery according to an embodiment.

## DETAILED DESCRIPTION

Hereinafter, various embodiments of the disclosed technology will be described. However, the embodiments may be modified into various other forms, and the disclosed technology is not limited to the embodiments described below.

Features of the disclosed technology disclosed in this patent document are described by example embodiments with reference to the accompanying drawings.

The disclosed technology can be implemented in some embodiments to provide an anode for a secondary battery and a lithium secondary battery including the same.

In order to implement a secondary battery having high capacity and high energy density, an anode for a secondary battery according to an embodiment may include a silicon-based active material having a discharge capacity higher than that of graphite as an active material. When the silicon-based active material having a relatively high discharge capacity is applied as an active material for the anode, a loading weight (LW) of an anode active material layer may also be lowered, thereby further increasing energy density.

However, when the anode includes the silicon-based active material, (i) resistance may increase due to a side reaction with an electrolyte, and (ii) the silicon-based active material may have a relatively high volumetric contraction/expansion rate during battery charging/discharging. Short circuits may occur in the battery or cracks may occur in the active material. Accordingly, there may be difficulties in securing excellent lifespan characteristics and rapid charging performance of the anode including the silicon-based active material.

According to an embodiment of the disclosed technology, the above-described issues may be alleviated, and a high-capacity lithium secondary battery having excellent lifespan characteristics and rapid charging characteristics may be provided. Embodiments of the disclosed technology are described in detail below with reference to FIG. 1.

FIG. 1 is a schematic cross-sectional view of a structure of an anode for a secondary battery according to an embodiment.

Anode for Secondary Battery

An anode 100 for a secondary battery according to an embodiment of the disclosed technology may include an anode current collector 10, a first anode mixture layer 21 on at least one surface of the anode current collector, and a second anode mixture layer 22 on the first anode mixture layer. The first anode mixture layer may include a first silicon-based active material including a carbon coating layer formed on a surface thereof, and a first conductive material. The second anode mixture layer may include a second silicon-based active material doped with a metal, and a second conductive material. The first conductive material may have a Raman R value according to Equation 1 below, greater than or equal to a Raman R value of the second conductive material.

[Equation 1]

$$Raman\ R = A_D/A_G$$

In Equation 1, $A_D$ may be a peak area value of an absorption region of 1330 to 1380 $cm^{-1}$, and $A_G$ may be a peak area value of an absorption region of 1550 to 1625 $cm^{-1}$.

The anode 100 may include an anode mixture layer 20 on at least one surface of the anode current collector 10, and the anode mixture layer may have a multilayer structure and may include a first anode mixture layer 21 and a second anode mixture layer 22 (see FIG. 1). In this case, the first anode mixture layer 21 may be a mixture layer (lower layer) on one surface adjacent to the anode current collector, and the second anode mixture layer 22 may be disposed on the first anode mixture layer, and may be a mixture layer (upper layer) relatively spaced apart from the anode current collector.

The anode current collector 10 may include a metal having excellent conductivity and excellent adhesion to an anode slurry. As an example, one selected from the group consisting of copper foil, nickel foil, stainless steel foil, titanium foil, nickel foam, copper foam, a polymer substrate coated with a conductive metal, and combinations thereof may be appropriately used for the anode current collector 10.

In the anode 100, the first anode mixture layer 21, a mixture layer adjacent to the anode current collector 10, may include a first silicon-based active material having a carbon coating layer formed on a surface thereof. The carbon coating layer, formed on a surface of a particle of the first silicon-based active material, may prevent the first silicon-based active material from being in contact with moisture in the atmosphere or anode slurry, and may further improve electrical conductivity of an active material. In addition, the first silicon-based active material having the carbon coating layer formed on the surface thereof may have excellent structural stability in a high-temperature environment due to a relatively small number of side reactions with an electrolyte. Accordingly, when the first silicon-based active material is included in the first anode mixture layer 21 adjacent to the anode current collector 10, an anode for a secondary battery having excellent conductivity and high-temperature lifespan characteristics may be provided.

The carbon coating layer may include a carbon element, and may include a carbon-based precursor component used to form a coating layer. As an example, the carbon coating layer may include at least one selected from the group consisting of amorphous carbon, carbon nanotubes, carbon nanofibers, graphite, graphene, graphene oxide, and reduced graphene oxide.

In some embodiments, a thickness of the carbon coating layer may be 5 to 30 nm, and a content of the carbon coating layer may be 1 to 10 wt% based on the total weight of the first silicon-based active material. As an example, the content of the carbon coating layer may be 2 to 5 wt% based on the total weight of the first silicon-based active material. When the thickness and content of the carbon coating layer are within the above-described ranges, an excellent level of effect obtained by introducing the carbon coating layer may be secured without characteristics of a silicon-based active material being degraded.

A method of forming the carbon coating layer on the surface of the first silicon-based active material is not particularly limited. As an example, (i) a method of thermally decomposing a carbon-based precursor such as a polymer or pitch including a carbon element on a surface of a particle of the first silicon-based active material, or (ii) a method of simultaneously thermally decomposing and depositing the carbon precursor and the first silicon-based active material may be applied, but the disclosed technology is not limited thereto.

In the anode 100, the second anode mixture layer 22, a mixture layer formed on the first anode mixture layer 21 and spaced apart from the anode current collector 10, may include a second silicon doped with a metal. Due to the metal doped into the second silicon-based active material, the second silicon-based active material may have micropores to reduce swelling of an anode during battery charging/discharging and suppress a change in volume of the second silicon-based active material, thereby effectively alleviating the occurrence of cracks in an active material. Accordingly, when the second silicon-based active material is included in the second anode mixture layer 22 adjacent to an electrolyte, an anode for a secondary battery having excellent rapid charging characteristics and room temperature lifespan characteristics may be provided.

In some embodiments, the metal may include at least one selected from among an alkali metal, an alkaline earth metal, a transition metal, and other metals. As an example, the metal may include at least one selected from among lithium (Li), magnesium (Mg), calcium (Ca), iron (Fe), titanium (Ti), vanadium (V), and aluminum (Al). In some embodiments, the metal may include magnesium (Mg). As an example, the second silicon-based active material doped with the above-described types of metals may be represented by chemical formulas such as $Li_2SiO_3$, $Li_2Si_2O_5$, $Li_4SiO_4$, MgSiO, and $MgSiO_3$.

In some embodiments, a content of the metal doped into the second silicon-based active material may be 3 to 20 wt% based on the total weight of the second silicon-based active material. As an example, a content of the metal doped into the second silicon-based active material and distributed on a surface of the second silicon-based active material and/or in the second silicon-based active material may be 5 to 17 wt%. When the content of the metal doped into the second silicon-based active material is within the above-described range, high-capacity characteristics caused by a silicon-based active material due to metal doping may be secured, while rapid charging characteristics and room temperature lifespan characteristics may also be improved.

In some embodiments, a content of metal hydroxide (for example, $Mg(OH)_2$) remaining on the surface of the second silicon-based active material may be less than 0.05 wt% based on the total weight of the second silicon-based active material. When the content of metal hydroxide remaining on the surface of the second silicon-based active material is within the above-described range, the second silicon-based active material may be doped with a sufficient amount of metal, and side reactions on the surface of the second silicon-based active material may be suppressed.

When the metal doped into the second silicon-based active material includes magnesium (Mg), a Mg1s spectrum of the surface of the second silicon-based active material measured using X-ray photoelectron spectroscopy (XPS) may satisfy Equation A below.

$$[\text{Equation A}]$$

$$P_{Mg}/(P_{Mg}+P_{MgO}) \leq 0.6$$

In Equation A, $P_{Mg}$ may be an area of a peak of 1303 eV of the Mg1s spectrum, and $P_{MgO}$ may be an area of a peak of 1304.5 eV of the Mg1s spectrum.

The $P_{Mg}$ may be an area of a peak (1303 eV) representing a magnesium element, and the $P_{MgO}$ may be the area of a peak (1304.5 eV) representing a combination of a magnesium element and an oxygen element. Accordingly, a $P_{Mg}/(P_{Mg}+P_{MgO})$ value of the Equation A may represent a percentage of magnesium metal, among magnesium metal, magnesium oxide, and magnesium hydroxide present on the surface of the second silicon-based active material.

When the second silicon-based active material satisfies a condition according to Equation A, magnesium, remaining on the surface of the second silicon-based active material, may be converted to magnesium hydroxide to alleviate the occurrence of side reactions, thereby preventing a degradation in lifespan characteristics of a secondary battery.

A method of doping the second silicon-based active material with the above-described types of metals is not particularly limited. As an example, a method of preparing a metal-doped silicon-based active material by (i) mixing the second silicon-based active material and a metal precursor to form a mixture, (ii) heating (sintering) the mixture to a temperature of 1000 to 2000°C and then cooling to form a composite, and (iii) crushing and fractionating the composite may be applied, but the disclosed technology is not limited thereto.

In some embodiments, the first silicon-based active material and the second silicon-based active material each may include at least one selected from among Si, SiOx (0<x<2), a Si-Q alloy (here, Q is an element selected from the group consisting of an alkali metal, an alkaline earth metal, a group 13 element, a group 14 element, a group 15 element, a group 16 element, a transition metal, a rare earth element, and combinations thereof, but not Si), and a Si-C composite, as a silicon-based active material raw material before carbon coating or metal doping is performed. As an example, the first silicon-based active material and the second silicon-based active material may each include SiOx (0<x<2) as a silicon-based active material raw material before carbon coating or metal doping is performed.

In some embodiments, a content of the first silicon-based active material included in the first anode mixture layer may be less than or equal to a content of the second silicon-based active material included in the second anode mixture layer. In the anode 100, a content of a silicon-based active material (first silicon-based active material) included in the first anode mixture layer 21, adjacent to the anode current collector 10, may be controlled to be less than a content of a silicon-based active material (second silicon-based active material) included in the second anode mixture layer 22, thereby more effectively preventing anode peeling and short-circuit phenomena due to a volume change of the silicon-based active material during battery charging/discharging, while maintaining a content of a silicon-based active material in the entire anode at an appropriate level or above to secure capacity characteristics. As an example, the content of the first silicon-based active material included in the first anode mixture layer may be 0.1 to 5 wt% or 1 to 4 wt%. In addition, the content of the second silicon-based active material included in the second anode mixture layer may be 5 to 30 wt% or 10 to 20 wt%.

In some embodiments, a total content of a silicon-based active material included in the anode mixture layer 20 (that is, a total content of the first silicon-based active material and the second silicon-based active material based on the entire anode mixture layer) may be 0.1 to 20 wt%. Specifically, the content of the silicon-based active material included in the anode mixture layer 20 may be 1 wt% or more, 5 wt% or more, or 7 wt% or more, and may be 20 wt% or less, 15 wt% or less, or 13 wt% or less. When the total content of the silicon-based active material included in the anode mixture layer 20 is within the above-described ranges, high-capacity characteristics of the battery may be secured and the effect of a volume change of the silicon-based active material during battery charging/discharging may also be effectively alleviated.

In an embodiment, the first anode mixture layer 21 may include only the first silicon-based active material as a silicon-based active material, and the second anode mixture layer 22 may include only the second silicon-based active material as a silicon-based active material. However, in another embodiment, the first anode mixture layer 21 and the second anode mixture layer 22 may each include both the first silicon-based active material and the second silicon-based active material described above. In this case, a content of the first silicon-based active material included in the first anode mixture layer 21 may be greater than or equal to a content of the second silicon-based active material, and a content of the second silicon-based active material included in the second anode mixture layer 22 may be greater than or equal to a content of the first silicon-based active material.

In some embodiments, the first anode mixture layer 21 and the second anode mixture layer 22 may each further include a carbon-based active material. The carbon-based active material may include at least one selected from among artificial graphite, natural graphite, hard carbon, soft carbon, carbon black, acetylene black, Ketjen black, super P, graphene, and fibrous carbon. As an example, the carbon-based active material may include at least one of artificial graphite and natural graphite. When the first anode mixture layer 21 and the second anode mixture layer 22 each further include the carbon-based active material, a content of the carbon-based active material in the first anode mixture layer 21 and a content of the carbon-based active material in the second anode mixture layer 22 may each be 80 to 99 wt% or 85 to 95 wt%.

The first anode mixture layer 21 and the second anode mixture layer 22 may each further include a conductive material. Specifically, the first anode mixture layer 21 may include a first conductive material, and the second anode mixture layer 22 may include a second conductive material. The conductive material may be used to provide conductivity to an electrode and maintain a structure of the electrode, and may be a material having conductivity without causing side reactions with other elements of a secondary battery. According to an embodiment, different types of conductive materials may be respectively applied to upper and lower layers of an anode mixture layer having a multilayer structure, thereby providing an anode for a secondary battery having more excellent capacity characteristics and lifespan characteristics.

The first conductive material may have a Raman R value according to Equation 1 below, greater than or equal to a Raman R value of the second conductive material.

$$[\text{Equation 1}]$$

$$\text{Raman R} = A_D/A_G$$

In Equation 1, $A_D$ may be a peak area value of an absorption region of 1330 to 1380 cm$^{-1}$, and $A_G$ may be a peak area value of an absorption region of 1550 to 1625 cm$^{-1}$.

The Raman R value may be a parameter representing relative crystallinity of a material, the $A_D$ value may represent a peak area of a region associated with an amorphous state, and the $A_G$ value may represent a peak area of a region associated with a crystalline state. Accordingly, the material may have relatively lower crystallinity as the Raman R value increases, and the material may have relatively higher crystallinity as the Raman R value decreases.

The peak area may be calculated by integrating an area of an absorption region in which a peak appears using a Raman spectroscope. Specifically, the peak area may be calculated using the Resolutions Pro program, and a baseline may be derived using a 2nd derivative method, and then an area derived by fitting a peak corresponding to a wave number of each region with a Gaussian curve may be integrated to calculate the peak area. In this case, Raman spectroscopic analysis may be performed under the following conditions: wavelength: 532 nm, magnification: 50 times, grating resolution: 1800 mm/l, laser power: 5%, and number of scans: 10.

In some embodiments, the Raman R value of the first conductive material may be 0.1 to 0.5, and the Raman R value of the second conductive material may be 0.001 to 0.1. As an example, the Raman R value of the first conductive material may be 0.11 or more or 0.13 or more, and may be 0.3 or less or 0.2 or less. In addition, the Raman R value of the second conductive material may be 0.005 or more, 0.01 or more, or 0.03 or more, and may be 0.09 or less.

When the Raman R values of the first conductive material and the second conductive material are applied as described above, a conductive material having relatively low crystallinity may be included in a first anode mixture layer (lower layer), adjacent to a current collector, thereby alleviating an issue such as electrode deintercalation caused by volume expansion of a silicon-based active material. In addition, a conductive material having high crystallinity and excellent conductivity and dispersibility may be included in a second anode mixture layer (upper layer) having relatively low energy density, to form and maintain a conductive path within an electrode layer, thereby further improving rapid charging characteristics.

The first conductive material may be a conductive material having relatively low reactivity and a relatively small specific surface area with an electrolyte, thereby alleviating side reactions with an electrolyte, and may refer to a conductive material included in the first anode mixture layer 21, a lower layer. The second conductive material may be a conductive material having relatively excellent dispersibility and conductivity and forming a conductive path capable of increasing electrical contact between components, thereby minimizing electrical network disconnection and alleviating an increase in resistance even when a volume of a silicon-based active material changes during battery charging/discharging, and may refer to a conductive material included in the second anode mixture layer 22, an upper layer.

In some embodiments, the first conductive material may include at least one selected from among artificial graphite, natural graphite, graphene, carbon black, acetylene black, Ketjen black, super P, and hard carbon.

In some embodiments, the second conductive material may include at least one selected from among a multi-walled carbon nanotube (MWCNT), a single-walled carbon nanotube (SWCNT), and a thin-walled carbon nanotube (TWCNT).

As an example, the first conductive material may be a graphite-based conductive material including at least one of artificial graphite and natural graphite.

When the graphite-based conductive material, a carbon-based active material and an anode active material, is applied as the first conductive material, the occurrence of side reactions with an electrolyte may be alleviated, thereby contributing to a reduction in electrolyte consumption and further improvement in capacity characteristics of an anode. In addition, when applying a CNT-based conductive material, such as a single-walled carbon nanotube (SWCNT), as the second conductive material, a conductive path capable of increasing electrical contact between components included in an anode mixture layer may be more easily formed, thereby minimizing the effect of a volume change of a silicon-based active material and further alleviating an increase in resistance.

In some embodiments, a particle diameter (D50) of the first conductive material may **be 1 to 10 $\mu$m, and a length of the second conductive material may be 5 to 100 $\mu$m. As an example, the particle size (D50) of the first conductive material may be 2 to 7 $\mu$m. In some** embodiments, a particle size (D50) of the second conductive material may be 1 to 15 nm. The particle size (D50) may refer to an average particle size based on 50% of a particle size distribution, and may be measured and calculated using a general particle size measuring device (for example, Microtrac MT 3000) and method.

In some embodiments, a content of the first conductive material included in the first anode mixture layer may be greater than or equal to a content of the second conductive material included in the second anode mixture layer.

In some embodiments, the content of the first conductive material included in the first anode mixture layer may be 0.3 to 5 wt%, and the content of the second conductive material included in the second anode mixture layer may be 0.01 to 0.3 wt%. As an example, the content of the first conductive material included in the first anode mixture layer may be 0.3 to 3 wt%, 0.35 to 1 wt%, or 0.4 to 0.6 wt%, and the content of the second conductive material included in the second anode mixture layer may be 0.05 to 0.15 wt%.

When the contents of the first and second conductive materials are adjusted within the above-described ranges, a content of a first conductive material included in a first anode mixture layer (lower layer), formed on one surface adjacent to a current collector, may be adjusted to a relatively high content, thereby increasing the number of contact points between the current collector and the first anode mixture layer. When the number of contact points are increased, resistance between an electrode and the current collector may be reduced, and the number of contact points between the current collector and the electrode may be maintained even when the electrode expands during use. In addition, a content of a second conductive material included in a second anode mixture layer (upper layer) may be adjusted to a relatively low content, such that a content of a conductive material included in the entire electrode may be reduced to secure economic efficiency, and a content of an active material in a mixture layer may be increased to implement an electrode having the same energy density with a relatively lower loading weight. In addition, when an excessive amount of conductive material is included in the upper layer, pores may be blocked, thereby alleviating issues such as a degradation in interfacial resistance and lifespan characteristics of the electrode.

In an embodiment, the first anode mixture layer 21 may include only a first conductive material as a conductive material, and the second anode mixture layer 22 may include only a second conductive material as a conductive material. However, in another embodiment, the first anode mixture layer 21 and the second anode mixture layer 22 may each include both the first conductive material and the second conductive material described above as a conductive material. In this case, a content of the first conductive material included in the first anode mixture layer may be greater than or equal to a content of the second conductive material, and a content of the second conductive material included in the second anode mixture layer may be greater than or equal to a content of the first conductive material.

In some embodiments, the first anode mixture layer 21 and the second anode mixture layer 22 may each further include an additional conductive material. As an example, the additional conductive material may include metal powder or metal fiber such as copper, nickel, aluminum, or silver, a conductive whisker such as zinc oxide and potassium titanate, a conductive metal oxide such as titanium oxide, or a conductive polymer such as a polyphenylene derivative alone or in combinations of two or more different types thereof.

In some embodiments, the first anode mixture layer 21 and the second anode mixture layer 22 may each further include a binder. The binder is not particularly limited as long as the binder is a compound serving to properly adhere components in an anode mixture layer to each other and the anode mixture layer to a current collector. As an example, the binder may be a rubber-based binder such as styrene-butadiene rubber (SBR), fluorine-based rubber, ethylene propylene rubber, butadiene rubber, isoprene rubber, or silane-based rubber, a cellulose-based binder such as carboxymethylcellulose (CMC), hydroxypropylmethylcellulose, methylcellulose, or alkali metal salts thereof, or a combination thereof.

As an example, the first anode mixture layer and the second anode mixture layer may each include a rubber-based binder.

As an example, the first anode mixture layer and the second anode mixture layer may each include a rubber-based binder and a cellulose-based binder.

In some embodiments, when the first anode mixture layer 21 and the second anode mixture layer 22 each further include a binder, a content of the binder included in the first anode mixture layer 21 and a content of the binder in the second anode mixture layer 22 may each be 0.1 to 10 wt%.

In some embodiments, when the first anode mixture layer and the second anode mixture layer each further include a rubber-based binder, the content of the rubber-based binder included in the first anode mixture layer may be greater than or equal to the content of the rubber-based binder included in the second anode mixture layer. As an example, the content of the rubber-based binder included in the first anode mixture layer may be 1.0 to 3 wt% or 1.5 to 2.5 wt%, and the content of the rubber-based binder included in the second anode mixture layer may be 0.1 to 1.0 wt% or 0.4 to 0.8 wt%.

When the content of the rubber-based binder included in the first anode mixture layer is excessively low, adhesive strength of the first anode mixture layer, adjacent to the current collector, may decrease, which may cause issues as the occurrence of a scrap and deintercalation of a mixture layer during a notching process. Conversely, when a content of a rubber-based binder in the entire anode is excessively high, electrical resistance may increase and battery characteristics may be degraded.

Accordingly, when the content of the rubber-based binder included in the first anode mixture layer, a lower layer, is adjusted to be relatively high as compared to the content of the rubber-based binder included in the second anode mixture layer, an upper layer, the occurrence of the above-described issues may be alleviated and the content of the rubber-based binder in the entire anode may be lowered, such that an increase in electrical resistance may also be alleviated.

Accordingly, when a content relationship of a rubber-based binder for each anode mixture layer is applied as described above, an electrode, having a multilayer structure, may have excellent flexibility and adhesion, thereby alleviating an issue such as electrode deintercalation during a process or cracks or electrode deintercalation during a charging/discharging process, and securing low resistance characteristics.

In some embodiments, a loading weight (LW) ratio of the first anode mixture layer and the second anode mixture layer may be 2:8 to 8:2. In some embodiments, a loading weight of the first anode mixture layer may be 1.5 to 9.5 mg/cm$^2$, and a loading weight of the second anode mixture layer may be 1.5 to 9.5 mg/cm$^2$. The loading weight (LW) may refer to an amount of an anode mixture layer formed on a current collector, that is, a layer including an active material, a binder, a conductive material, and the like, represented in units of weight per area. In this case, the area may be based on an area of the current collector, and the weight may be based on a weight of the entire anode mixture layer formed. When the loading weight (LW) values and ratio of the first anode mixture layer and the second anode mixture layer are within the above-described ranges, an anode having a multilayer structure may have excellent capacity characteristics, lifespan characteristics, and rapid charging characteristics.

A method of preparing the anode 100 is not particularly limited. As an example, an anode slurry including a first solvent, a first silicon-based active material, and a first conductive material may be coated on the anode current collector 10 using a method such as bar coating, casting, or spraying, and may be dried at 70 to 100°C to form a first anode mixture layer 21, and an anode slurry including a second solvent, a second silicon-based active material, and a second conductive material may be coated on the first anode mixture layer using a method such as bar coating, casting, or spraying, and may be dried at 70 to 100°C to form a second anode mixture layer 22, thereby preparing the anode 100.

The solvent may be, for example, dimethyl sulfoxide (DMSO), isopropyl alcohol, N-methylpyrrolidone (NMP), acetone, or water. A sufficient amount of the solvent being used may dissolve or disperse an active material, a coating material and a binder in consideration of coating thickness of a composition for forming an anode mixture layer and manufacturing yield, and may have a viscosity capable of exhibiting excellent thickness uniformity upon subsequent coating for forming the anode mixture layer.

Lithium Secondary Battery

A lithium secondary battery according to an embodiment may include an anode for a secondary battery according to one of the above-described embodiments. As an example, the lithium secondary battery may include an anode and a cathode for a secondary battery according to one of the above-described embodiments. Optionally, the lithium secondary battery may further include or may not further include a separator interposed between the anode and the cathode.

In some embodiments, the cathode may include a lithium-transition metal composite oxide as an active material. As an example, the lithium-transition metal composite oxide may include an NCM-based anode active material represented by a chemical formula of $Li_xNi_aCo_bMn_cO_y$ ($0<x\leq1.1$, $2\leq y\leq2.02$, $0<a<1$, $0<b<1$, $0<c<1$, $0<a+b+c\leq1$), or a lithium iron phosphate (LFP)-based anode active material represented by a chemical formula of $LiFePO_4$.

In some embodiments, the separator includes a porous polymer film formed of a polyolefin-based polymer, such as an ethylene homopolymer, a propylene homopolymer, an ethylene/butene copolymer, an ethylene/hexene copolymer, and an ethylene/methacrylate copolymer. In addition, the separator may include a non-woven fabric formed of a high melting point glass fiber or a polyethylene terephthalate fiber.

The lithium secondary battery may have excellent high-capacity characteristics, lifespan characteristics, and rapid charging characteristics, and thus may be highly useful as a power source for electric vehicles (EV).

**Examples and Comparative Examples**

1. Preparation of Anode and Manufacturing of Secondary Battery

1) Preparation of Anode

A first anode slurry including a carbon-based active material, a first silicon-based active material, a binder, and a first conductive material, and a second anode slurry including a carbon-based active material, a second silicon-based active material, a binder, and a second conductive material were prepared, respectively. Thereafter, the first anode slurry and the second anode slurry were simultaneously coated on a copper foil, a current collector, and then dried at 80°C to prepare an anode for a secondary battery having a multilayer structure including a first anode mixture layer on the current collector, and a second anode mixture layer formed on the first anode mixture layer. A loading weight (LW) ratio of the first anode mixture layer and the second anode mixture layer was applied at 5:5.

In this case, magnesium-doped silicon-based active material (Mg-doped $SiO_x$) and silicon-based active material on which a carbon coating layer (carbon coated $SiO_x$) is formed were applied as the first and second silicon-based active materials differently according to the examples and comparative examples. A carbon nanotube having a Raman R value of 0.07 and a graphite-based conductive material having a Raman R value of 0.15 according to Equation 1 below were applied as the first and second conductive materials differently according to the examples and comparative examples. Residual artificial graphite was applied as a carbon-based active material, and carboxymethylcellulose (CMC) and styrene-butadiene rubber (SBR) were applied as binders.

$$[\text{Equation 1}]$$

$$\text{Raman R} = A_D/A_G$$

In Equation 1, $A_D$ may be a peak area value of an absorption region of 1330 to 1380 $cm^{-1}$, and $A_G$ may be a peak area value of an absorption region of 1550 to 1625 $cm^{-1}$.

In this case, the peak area may be calculated using the Resolutions Pro program. Specifically, a baseline may be derived using a 2nd derivative method, and then an area derived by fitting a peak corresponding to a wave number of each region with a Gaussian curve may be integrated to calculate the peak area. In addition, Raman spectroscopic analysis may be performed under the following conditions: wavelength: 532 nm, magnification: 50 times, grating resolution: 1800 mm/l, laser power: 5%, and number of scans: 10.

Contents of carboxymethylcellulose (CMC) and styrene-butadiene rubber (SBR), binders included in the first anode mixture layer, were 1.2 wt% and 2.4 wt%, respectively, and contents of carboxymethylcellulose (CMC) and styrene-butadiene rubber (SBR), binders included in the second anode mixture layer, were 1.2 wt% and 0.6 wt%, respectively. Contents of the first silicon-based active material and the first conductive material included in the first anode mixture layer, and contents of the second silicon-based active material and the second conductive material included in the second anode mixture layer were adjusted as indicated in Table 1 below according to the embodiments and comparative examples.

[Table 1]

| | First anode mixture layer (lower layer) | | | | Second anode mixture layer (upper layer) | | | |
| --- | --- | --- | --- | --- | --- | --- | --- | --- |
| | First silicon-based active material | | First conductive material | | Second silicon-based active material | | Second conductive material | |
| | Type | Content (wt%) | Raman R value $(A_D/A_G)$ | Content (wt%) | Type | Content (wt%) | Raman R value $(A_D/A_G)$ | Content (wt%) |
| Example 1 | B | 3 | 0.15 | 3 | A | 15 | 0.07 | 0.1 |
| Example 2 | B | 3 | 0.07 | 0.1 | A | 15 | 0.07 | 0.1 |
| Comparative Example 1 | A | 3 | 0.15 | 3 | B | 15 | 0.07 | 0.1 |
| Comparative Example 2 | A | 3 | 0.07 | 0.1 | B | 15 | 0.07 | 0.1 |
| Comparative Example 3 | B | 3 | 0.07 | 0.1 | A | 15 | 0.15 | 3 |
| Comparative Example 4 | B | 3 | 0.07 | 3 | A | 15 | 0.15 | 0.1 |
| A: Mg-doped SiOx B: Carbon coated SiOx | | | | | | | | |

2) Manufacturing of Secondary Battery

A cathode was prepared by coating, on an aluminum foil, and drying a slurry including an NCM-based active material, a Li-transition metal composite oxide, and a secondary battery cell manufactured by interposing a polyolefin separator between the cathode and the anode prepared above was placed in a pouch for a secondary battery. Thereafter, a pouch-type lithium secondary battery was manufactured by injecting an electrolyte in which 1 M of $LiPF_6$ was dissolved in a solvent including a mixture of ethylene carbonate (EC) and diethyl carbonate (DEC) into the pouch, and then sealing the pouch. The manufactured pouch-type lithium secondary battery was applied as secondary battery samples of the examples and the comparative examples.

**2. Evaluation of Secondary Battery**

1) Room temperature (25°C) capacity maintenance rate

The secondary battery manufactured as described above was subjected to evaluation of lifespan characteristics in a range of DOD 94% (SOC 4-98%) in a chamber in which a temperature of 25°C is maintained. The secondary battery was charged with a current of 0.3 C until a voltage corresponding to SOC 98% was reached under a constant current/constant voltage (CC/CV) condition, cut off by a current of 0.05 C, and discharged with a current of 0.3 C until a voltage corresponding to SOC4 was reached under a constant current (CC) condition to measure a discharge capacity thereof. After repeatedly performing the above-described process for 500 cycles, a discharge capacity retention rate of the secondary battery compared to an initial discharge capacity of the secondary battery was measured as a percentage, and results thereof are indicated in Table 2 below.

2) High temperature (45°C) capacity maintenance rate

A capacity retention rate of the secondary battery manufactured as described above was measured during evaluation of high temperature lifespan characteristics in a chamber in which a temperature of 45°C is maintained in the same manner as the evaluation of room temperature (25°C) lifespan characteristics, and results thereof are indicated in Table 2 below.

3) Rapid charging capacity maintenance rate

The secondary battery manufactured as described above was charged to reach DOD 72% within 35 minutes according to a step charge method (C-rate: 2.5C/2.25C/2.0C/1.75C/1.5C/1.25C/1.0C/0.75C/0.5C), and then discharged with a current of 1/3 C. Using the above-described charging/discharging as 1 cycle, 300 cycles were repeated with a waiting time of 10 minutes between charging/discharging cycles, and a discharge capacity retention rate of the secondary battery compared to an initial discharge capacity of the secondary battery was measured as a percentage to measure a rapid charging capacity maintenance rate of the secondary battery, and results thereof are indicated in Table 2 below.

[Table 2]

| | Room temperature capacity maintenance rate (%) | High temperature capacity maintenance rate (%) | Rapid charging capacity maintenance rate (%) |
|---|---|---|---|
| **Example 1** | 95.6 | 88.8 | 97.9 |
| **Example 2** | 95.1 | 88.5 | 97.5 |
| **Comparative Example 1** | 93.3 | 88.1 | 92.5 |
| **Comparative Example 2** | 93.4 | 88.0 | 92.3 |
| **Comparative Example 3** | 83.7 | 80.9 | 79.8 |
| **Comparative Example 4** | 72.2 | - (Ends at 400 cycles) | 70.8 |

Referring to Tables 1 and 2, in Examples 1 and 2, it was found that a second anode mixture layer including a Mg-doped silicon-based active material having excellent lifespan characteristics, and a first anode mixture layer including a silicon-based active material on which a carbon coating layer, having excellent high temperature characteristics, is formed exhibit both excellent room temperature and high temperature lifespan characteristics and rapid charging characteristics. In addition, when comparing Example 1 and Example 2 to each other, in Example 1, even when a first conductive material (R = 0.15) having a relatively large Raman R value was used, a sufficient conductive path was formed due to a high content of the first conductive material included in the first anode mixture layer. In Example 2, when a second conductive material (R = 0.07) having a relatively small Raman R value was used, a sufficient conductive path was formed due to a low content of the first conductive material in the first anode mixture layer. However, due to excellent dispersibility, pores within an electrode were reduced. Thus, it was confirmed that Example 2 shows performance slightly inferior to that of Example 1 in which the first conductive material (R = 0.15) having a relatively large Raman R value was applied.

Conversely, it was confirmed that Comparative Examples 1 and 2 show room temperature and rapid charging characteristics inferior to those of Examples 1 and 2 due to a second anode mixture layer including a carbon-coated silicon-based active material having lifespan characteristics inferior to those of a Mg-doped silicon-based active material, and show high temperature lifespan characteristics slightly inferior to those of Example 1 due to carbon-coated silicon-based active material characteristics.

In addition, in Comparative Examples 3 and 4, a Raman R value of a first conductive material included in a first anode mixture layer was less than a Raman R value of a second conductive material included in a second anode mixture layer. Thus, it was found that both lifespan characteristics and rapid charging characteristics are inferior to those of the examples.

Considering the above-described results, it may be determined that when characteristics of a silicon-based active material and a conductive material are appropriately adjusted to be different from each other in consideration of characteristics required by an upper layer and a lower layer of an anode having a multilayer structure, as in Examples 1 and 2, a high-capacity anode for a secondary battery may have excellent both room temperature/high temperature lifespan characteristics and rapid charging characteristics.

Only specific examples of implementations of certain embodiments are described. Variations, improvements and enhancements of the disclosed embodiments and other embodiments may be made based on the disclosure of this patent document.

**Claims**

1. An anode for a secondary battery, the anode comprising:

   an anode current collector;
   a first anode mixture layer on at least one surface of the anode current collector; and
   a second anode mixture layer on the first anode mixture layer,
   wherein the first anode mixture layer includes a first silicon-based active material including a carbon coating layer formed on a surface thereof, and a first conductive material,
   the second anode mixture layer includes a second silicon-based active material doped with a metal, and a second conductive material,
   the first conductive material has a Raman R value according to Equation 1 below, greater than or equal to a Raman R value of the second conductive material, and

   $$[\text{Equation 1}]$$

   $$\text{Raman R} = A_D/A_G$$

   where $A_D$ is a peak area value of an absorption region of 1330 to 1380 cm$^{-1}$, and $A_G$ is a peak area value of an absorption region of 1550 to 1625 cm$^{-1}$.

2. The anode of claim 1, wherein the metal includes at least one selected from among lithium (Li), magnesium (Mg), calcium (Ca), iron (Fe), titanium (Ti), vanadium (V), and aluminum (Al).

3. The anode of claim 1 or 2, wherein a content of the first silicon-based active material included in the first anode mixture layer is less than or equal to a content of the second silicon-based active material included in the second anode mixture layer.

4. The anode of any one of claims 1 to 3, wherein the content of the first silicon-based active material included in the first anode mixture layer is 0.1 to 5 wt%.

5. The anode of any one of claims 1 to 4, wherein the content of the second silicon-based active material included in the second anode mixture layer is 5 to 30 wt%.

6. The anode of any one of claims 1 to 5, wherein the Raman R value of the first conductive material is 0.1 to 0.5.

7. The anode of any one of claims 1 to 6, wherein the Raman R value of the second conductive material is 0.001 to 0.1.

8. The anode of any one of claims 1 to 7, wherein the first conductive material includes at least one selected from among artificial graphite, natural graphite, graphene, carbon black, super P, and hard carbon.

9. The anode of any one of claims 1 to 8, wherein the second conductive material includes at least one selected from among a multi-walled carbon nanotube (MWCNT), a single-walled carbon nanotube (SWCNT), and a thin-walled carbon nanotube (TWCNT).

10. The anode of any one of claims 1 to 9, wherein a particle size (D50) of the **first conductive material is 1 to 10 $\mu$m.**

11. The anode of any one of claims 1 to 10, wherein a length of the second **conductive material is 5 to 100 $\mu$m.**

12. The anode of any one of claims 1 to 11, wherein a content of the first conductive material included in the first anode mixture layer is greater than or equal to a content of the second conductive material included in the second anode mixture layer.

13. The anode of any one of claims 1 to 12, wherein the content of the first conductive material included in the first anode mixture layer is 0.3 to 5 wt%.

14. The anode of any one of claims 1 to 13, wherein the content of the second conductive material included in the second anode mixture layer is 0.01 to 0.3 wt%.

15. A lithium secondary battery comprising:
the anode of any one of claims 1 to 14.

<u>100</u>

FIG. 1

Europäisches
Patentamt

European
Patent Office

Office européen
des brevets

# EUROPEAN SEARCH REPORT

**Application Number**

EP 24 15 6960

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 102 491 619 B1 (SK ON CO LTD [KR]) 20 January 2023 (2023-01-20) | 1-3,5,8, 9,12,14, 15 | INV.<br>H01M4/133<br>H01M4/134 |
| Y | * claims 1-17 * | 1-5,7-9, 12,13,15 | H01M4/36<br>H01M4/38 |
| | & US 2024/047651 A1 (JANG HWAN HO [KR] ET AL) 8 February 2024 (2024-02-08)<br>* claims 1-18 *<br>* paragraph [0142] - paragraph [0146] *<br>* paragraph [0129] - paragraph [0131] *<br>* paragraph [0052] - paragraph [0054] *<br>* paragraph [0076] *<br>----- | | H01M4/587<br>H01M4/62<br>H01M10/0525 |
| Y | EP 4 064 383 A1 (SK INNOVATION CO LTD [KR]) 28 September 2022 (2022-09-28)<br>* claims 1-14 *<br>* example 1; table 1 *<br>* paragraph [0105] *<br>* paragraph [0069] *<br>* paragraph [0041] *<br>----- | 1-5,7-9, 12,13,15 | |
| X,P | WO 2023/090847 A1 (LG ENERGY SOLUTION LTD [KR]) 25 May 2023 (2023-05-25)<br>* claims 1-14 *<br>* paragraph [0174] - paragraph [0190] *<br>----- | 1-3,5,9, 12-15 | **TECHNICAL FIELDS SEARCHED (IPC)**<br>H01M |
| A | CN 115 000 407 A (A123 SYSTEMS LLC) 2 September 2022 (2022-09-02)<br>* paragraph [0032] - paragraph [0067]; claims 1-10 *<br>----- | 1-15 | |
| A | US 2022/123289 A1 (BAE JI HEE [KR] ET AL) 21 April 2022 (2022-04-21)<br>* claims 1-10 *<br>----- | 1-15 | |
| | -/-- | | |

The present search report has been drawn up for all claims

| Place of search | Date of completion of the search | Examiner |
|---|---|---|
| The Hague | 8 July 2024 | Ramos Alonso, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 7 145672 B2 (SANYO CHEMICAL IND LTD; NISSAN MOTOR) 3 October 2022 (2022-10-03) * claims 1-6 * * paragraph [0032] - paragraph [0033] * * paragraph [0058] - paragraph [0077] * ----- | 1-15 | |

**TECHNICAL FIELDS SEARCHED      (IPC)**

The present search report has been drawn up for all claims

| Place of search | Date of completion of the search | Examiner |
|---|---|---|
| The Hague | 8 July 2024 | Ramos Alonso, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 6960

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2024

| Patent document cited in search report | | Publication date | Patent family member(s) | | Publication date |
|---|---|---|---|---|---|
| KR 102491619 | B1 | 20-01-2023 | CN 116632161 | A | 22-08-2023 |
| | | | EP 4328994 | A1 | 28-02-2024 |
| | | | KR 102491619 | B1 | 20-01-2023 |
| | | | KR 20240015002 | A | 02-02-2024 |
| | | | US 2024030409 | A1 | 25-01-2024 |
| | | | US 2024047651 | A1 | 08-02-2024 |
| EP 4064383 | A1 | 28-09-2022 | CN 115132969 | A | 30-09-2022 |
| | | | CN 117334839 | A | 02-01-2024 |
| | | | EP 4064383 | A1 | 28-09-2022 |
| | | | EP 4220752 | A2 | 02-08-2023 |
| | | | KR 20220133624 | A | 05-10-2022 |
| | | | KR 20230127948 | A | 01-09-2023 |
| | | | US 2022310991 | A1 | 29-09-2022 |
| WO 2023090847 | A1 | 25-05-2023 | CN 118216015 | A | 18-06-2024 |
| | | | KR 20230071384 | A | 23-05-2023 |
| | | | WO 2023090847 | A1 | 25-05-2023 |
| CN 115000407 | A | 02-09-2022 | NONE | | |
| US 2022123289 | A1 | 21-04-2022 | CN 114373889 | A | 19-04-2022 |
| | | | DE 102021126672 | A1 | 21-04-2022 |
| | | | KR 20220049997 | A | 22-04-2022 |
| | | | KR 20230109122 | A | 19-07-2023 |
| | | | US 2022123289 | A1 | 21-04-2022 |
| JP 7145672 | B2 | 03-10-2022 | JP 7145672 | B2 | 03-10-2022 |
| | | | JP 2020013754 | A | 23-01-2020 |

EPO FORM P0459

For more details about this annex : see Official Journal of the European Patent Office, No. 12/82